# EUROPÄISCHE PATENTANMELDUNG

(11) **EP 3 812 319 A1**
(43) Veröffentlichungstag der Anmeldung: **28.04.2021**
(21) Anmeldenummer: 20197681.8
(22) Anmeldetag: 23.09.2020
(51) Int. Cl.: B65G 54/02, H02K 41/02

(54) **VORRICHTUNG ZUM BEWEGEN VON PORTIONEN EINES LEBENSMITTELPRODUKTS**

(30) Priorität: 21.10.2019 DE 102019128395
(71) Anmelder: Weber Maschinenbau GmbH Breidenbach, 35236 Breidenbach (DE)
(72) Erfinder: Clößner, Stephan, 35630 Ehringshausen (DE); Siarkowski, Pascal, 35216 Biedenkopf (DE); Metz, Melanie, 34582 Borken (DE); Eckhardt, Christoph, 35236 Breidenbach (DE); Gerlach, Jochen, 35232 Dautphetal (DE); Burk, Michael, 35236 Breidenbach (DE)
(74) Vertreter: Manitz Finsterwald Patent- und Rechtsanwaltspartnerschaft mbB

(57) **Zusammenfassung**

Die Erfindung betrifft eine Vorrichtung zum Bewegen von Portionen eines Lebensmittelprodukts, umfassend ein Bahnsystem, das einen Transportweg mit zumindest einer Kurve definiert, zumindest einen Transportmover, wobei der Transportmover zumindest eine erste Gleiteinheit und eine zweite Gleiteinheit aufweist, die von dem Bahnsystem gleitend geführt sind und die mittels wenigstens einer Verbindungseinheit, die zumindest ein Verbindungselement umfasst, miteinander gekoppelt sind, wobei die Verbindungseinheit mit wenigstens einer Aufnahmeeinrichtung zur Aufnahme zumindest einer Portion gekoppelt ist und einen Abstand zwischen der ersten Gleiteinheit und der zweiten Gleiteinheit definiert, der zumindest einem Krümmungsradius der Kurve entspricht oder größer ist, und eine Steuereinrichtung zur individuellen Steuerung der Bewegung des Transportmovers in dem Bahnsystem.

## Beschreibung

Die vorliegende Erfindung betrifft eine Vorrichtung zum Bewegen von Portionen eines Lebensmittelprodukts mit einem Bahnsystem, das einen Transportweg mit zumindest einer Kurve definiert, mit zumindest einem Transportmover, der in dem Bahnsystem geführt ist, und mit einer Steuereinrichtung zur individuellen Steuerung der Bewegung des Transportmovers in dem Bahnsystem.

Beispielsweise aus der DE 10 2014 106 400 A1 ist eine derartige Vorrichtung bekannt. Die im Stand der Technik beschriebenen Mover umfassen zwei quaderförmige Gleitstücke, die in einem festen, recht geringen Abstand durch einen Steg verbunden sind. Der Steg kann einen Träger für Lebensmittelprodukte aufnehmen. Beim Durchfahren enger Kurven des zugehörigen Bahnsystems folgt der Mittelpunkt der Mover daher nahezu dem Verlauf des Bahnsystems, wodurch hohe Fliehkräfte auf den Träger und das transportierte Lebensmittelprodukt wirken. So kann es zu einem Verrutschen oder sogar Abrutschen eines Produkts von dem Träger und/oder, bei fließfähigen Produkten, zu einem Verschütten und/oder Überlaufen des transportierten Behältnisses kommen. Entsprechend ist mit einer solchen Vorrichtung lediglich ein langsames Durchfahren von Kurven möglich. Bei längeren Trägern kommt es in Kurven zudem zu einem starken Ausschwenken zur Kurvenaußenseite hin.

Ausgehend von diesem Stand der Technik liegt der vorliegenden Erfindung die Aufgabe zugrunde, eine Vorrichtung der eingangs beschriebenen Art zu schaffen, die sich durch eine erhöhte Wirtschaftlichkeit und eine erhöhte Zuverlässigkeit auszeichnet, was insbesondere durch das Vermeiden nachteiliger Auswirkungen auf die zu transportierenden Produkte beim Durchfahren enger Kurven angestrebt wird.

Diese Aufgabe wird durch eine Vorrichtung mit den Merkmalen des Anspruchs 1 gelöst.

Eine erfindungsgemäße Vorrichtung zum Bewegen von Portionen eines Lebensmittelprodukts umfasst ein Bahnsystem, das einen Transportweg mit zumindest einer Kurve definiert, sowie zumindest einen Transportmover, wobei der Transportmover zumindest eine erste Gleiteinheit und eine zweite Gleiteinheit aufweist, die von dem Bahnsystem gleitend geführt sind und die mittels wenigstens einer Verbindungseinheit, die zumindest ein Verbindungselement umfasst, miteinander gekoppelt sind. Die Verbindungseinheit ist mit wenigstens einer Aufnahmeeinrichtung zur Aufnahme zumindest einer Portion gekoppelt und definiert einen Abstand zwischen der ersten Gleiteinheit und der zweiten Gleiteinheit, der zumindest einem Krümmungsradius der Kurve entspricht oder größer ist. Zudem umfasst die Vorrichtung eine Steuereinrichtung zur individuellen Steuerung der Bewegung des Transportmovers in dem Bahnsystem.

Der Erfindung liegt mit anderen Worten der allgemeine Gedanke zugrunde, dass der Weg, den der Mittelpunkt des Transportmovers beschreibt, über die Wahl des Abstands zwischen den in dem Bahnsystem geführten Gleiteinheiten definiert wird. Insbesondere kann der durch die Verbindungseinheit definierte Abstand zwischen der ersten Gleiteinheit und der zweiten Gleiteinheit so groß sein, dass die Aufnahmeeinrichtung, und insbesondere ein Bereich der Aufnahmeeinrichtung, auf dem die Portion aufliegt, bei Durchfahren einer Kurve eine Bahnkurve überstreicht, deren Krümmungsradius merklich größer ist als der Krümmungsradius des Bahnsystems, insbesondere so groß, dass negative Auswirkungen auf das Transportgut vermieden werden.

Der Mittelpunkt des Transportmovers beschreibt mit größer werdendem Abstand zwischen den Gleiteinheiten eine Parabelbahn mit größer werdendem Kurvenradius. Dadurch werden die auf Portionen von Produkten wirkenden Kräfte bei Kurvendurchfahrt reduziert und ein Verrutschen und/oder Auslaufen von Produkten kann wirksam vermieden werden. Das Einleiten von Kurven und der Auslauf des Transportmovers aus Kurven werden dadurch sanfter, d. h. weniger ruckartig. Dadurch werden höhere Bewegungsgeschwindigkeiten der Transportmover in dem Bahnsystem möglich, insbesondere in Kurven sowie im gesamten Bahnverlauf, ohne dass Brems- und Beschleunigungsvorgänge nötig sind. Auch das Ausschwenken einer Aufnahmeeinrichtung zur Außenseite einer durchfahrenen Kurve hin wird durch einen vergrößerten Abstand zwischen den Gleiteinheiten des Transportmovers reduziert.

Die zur gleitenden Führung in dem Bahnsystem vorgesehenen Gleiteinheiten können jeweils zwei oder mehrere Gleitelemente, insbesondere miteinander verbundene Gleitelemente, umfassen. Der Abstand zwischen den Gleitelementen in der Gleiteinheit kann dabei variierbar sein. Vorteilhafterweise weisen die Gleitelemente keine Räder oder Rollen auf, sodass sie auch in Bereichen mit erhöhtem Hygienebedarf eingesetzt werden können und einer einfachen Reinigung zugänglich sind. Solche Gleitelemente können beispielsweise quaderförmig sein und in oder auf einer entsprechenden, von dem Bahnsystem ausgebildeten Schiene gleiten.

Das Verbindungselement der Verbindungseinheit zur Kopplung der Gleiteinheiten kann beispielsweise stegförmig ausgebildet sein. Eine mit der Verbindungseinheit gekoppelte Aufnahmeeinrichtung kann zur unmittelbaren Aufnahme oder auch nur zur mittelbaren Aufnahme einer Lebensmittelportion vorgesehen sein: beispielsweise können Lebensmittelportionen, insbesondere Fleisch-, Wurst- oder Käseportionen, unmittelbar auf eine als Träger ausgebildete Aufnahmeeinrichtung oder auch auf ein darauf befindliches Trägerpapier oder ähnliches aufgelegt werden. Die Aufnahmeeinrichtung kann auch einen Halter oder eine Aufnahme für einen Portionsträger umfassen, insbesondere für Becher und/oder Schalen, welche beispielsweise mit einem Fertiggericht, mit Wurst-, Käse- oder Fleischportionen befüllbar sein können. Zudem kann eine Aufnahmeeinrichtung zur Aufnahme von Teigwaren ausgebildet sein. Eine Aufnahmeeinrichtung kann auch derart ausgestaltet sein, dass sie Baguettes, Pizza, Sandwiches oder ähnliches aufnehmen kann, welche insbesondere auf der Aufnahmeeinrichtung belegt werden können.

Vorteilhafte Ausbildungen der Erfindung sind den Unteransprüchen, der Beschreibung und den Zeichnungen zu entnehmen.

Gemäß einer Ausführungsform ist eine dritte Gleiteinheit vorgesehen, die zwischen der ersten und der zweiten Gleiteinheit angeordnet ist, wobei die Verbindungseinheit ein erstes Verbindungselement und ein zweites Verbindungselement umfasst, wobei die dritte Gleiteinheit mittels des ersten Verbindungselements mit der ersten Gleiteinheit und mittels des zweiten Verbindungselement mit der zweiten Gleiteinheit gekoppelt ist. Die dritte Gleiteinheit kann wiederum ein oder mehrere Gleitelemente umfassen.

Dabei ist die Gesamtlänge des derart aufgebauten Transportmovers größer als zumindest ein Krümmungsradius der Kurve. Es können auch die Längen des ersten und/oder zweiten Verbindungselements größer als ein Kurvenradius sein, wobei auch Längen kleiner als oder gleich dem Kurvenradius möglich sind. Das erste und das zweite Verbindungselement können gleich lang sein oder sich in ihrer Länge unterscheiden.

Es versteht sich, dass ein derart gestalteter Transportmover nach Art eines Zuges mit weiteren Gleiteinheiten und/oder Verbindungselementen ergänzt und verlängert werden kann.

Das erste Verbindungselement kann mit einer ersten Aufnahmeeinrichtung und das zweite Verbindungselement mit einer zweiten Aufnahmeeinrichtung gekoppelt sein, die jeweils zur Aufnahme zumindest einer Portion vorgesehen sind.

Alternativ kann eine Aufnahmeeinrichtung an wenigstens einem Kopplungselement angeordnet sein, das das erste Verbindungselement und das zweite Verbindungselement miteinander verbindet. Das Kopplungselement überbrückt dabei gewissermaßen die Verbindungselemente, wobei die Befestigungsposition des Kopplungselements an den Verbindungselementen variierbar sein kann. Durch die dritte Gleiteinheit kann einerseits vorteilhaft die Fahrstabilität des Transportmovers erhöht werden. Andererseits kann die Aufnahmeeinrichtung zugleich Kurven auf der Kurveninnenseite schneiden, wodurch sie einem Bahnverlauf mit vergrößertem Kurvenradius folgt, was eine Reduktion der auf ein Transportgut wirkenden Fliehkräfte bewirkt.

Vorteilhafterweise sind die Gleiteinheiten und die ihnen jeweils zugeordneten Verbindungselemente gelenkig oder drehbar um eine Drehachse, die senkrecht zu einer Transportrichtung angeordnet ist, miteinander gekoppelt. Alternativ oder zusätzlich sind vorteilhafterweise die Verbindungselemente und das ihnen jeweils zugeordnete Kopplungselement gelenkig oder drehbar um eine Drehachse, die senkrecht zu einer Transportrichtung angeordnet ist, miteinander gekoppelt. Dies ermöglicht, dass die Verbindungselemente bzw. das Kopplungselement bei Kurvenfahrt zur Kurveninnenseite hin derart von dem Verlauf des Bahnsystems abweichen können, dass sie die Kurve schneiden, wodurch sich für das Transportgut eine parabelförmige Bahnkurve mit erhöhtem Kurvenradius und reduzierten Fliehkräften ergibt.

Gemäß einer vorteilhaften Ausführungsform ist eine Längserstreckung des Verbindungselements oder - falls mehr als ein Verbindungselement vorgesehen ist - zumindest eines der Verbindungselemente und/oder des Kopplungselements variierbar, insbesondere im laufenden Betrieb. Zu diesem Zweck können die Verbindungselemente und/oder das Kopplungselement teleskopartig ausfahrbar sein und optional auch federbelastet oder pneumatisch gedämpft sein. Die Verbindungs- und/oder Kopplungselemente können aktiv längenverstellbar sein. Vorteilhafterweise kann eine Längenverstellung im laufenden Betrieb der Vorrichtung über die Bahnsteuerung erfolgen. Dies kann beispielsweise dadurch erzielt werden, dass die Steuereinrichtung gezielt Geschwindigkeitsunterschiede zwischen den individuellen Gleiteinheiten eines Transportmovers einstellt. Insbesondere kann gezielt vor Kurven und/oder vor und/oder hinter Aufnahme-, Abgabe- und/oder Übergabebereichen für Lebensmittelportionen eine Längserstreckung angepasst werden. Alternativ oder zusätzlich kann eine Längenverstellung beispielsweise auch durch ein Auffahren des Transportmovers und/oder individueller Gleiteinheiten auf eine Blockierstelle erreicht werden. Generell kann die Längserstreckung auch manuell voreinstellbar sein.

Es kann durch eine gezielte Variierung der Längserstreckung eines Verbindungselements und/oder Kopplungselements auch das Ausschwenken einer Aufnahmeeinrichtung zur Kurvenaußenseite hin flexibel eingestellt werden. So kann das Ausschwenken, insbesondere auch unter Berücksichtigung der Transportgeschwindigkeit, besonders an die räumlichen Gegebenheiten verschiedener Abschnitte des Transportsystems, beispielsweise an enge Produktionsbereiche, sowie an den Befüllungszustand der Aufnahmeeinrichtung für Lebensmittel angepasst werden.

Gemäß einer weiteren Ausführungsform können die Höhe und/oder Neigung der Verbindungseinheit und/oder des Kopplungselements und/oder der Aufnahmeeinrichtung bezüglich des Bahnsystems einstellbar sein, insbesondere im laufenden Betrieb. Grundsätzlich kann eine Höhen- und/oder Neigungsverstellung durch die Steuereinrichtung der Transportvorrichtung erfolgen. Insbesondere kann die Justierung von Höhe und/oder Neigung durch mechanische externe Beeinflussung erfolgen, wie zum Beispiel durch ein Auffahren auf entsprechende Steuerrampen oder Leitbleche. Auf diese Weise kann beispielsweise eine waagrechte Ausrichtung der Aufnahmeeinrichtung entlang des Transportwegs stets sichergestellt werden, auch wenn der Bahnverlauf eine Überwindung von Höhenunterschieden erfordert.

Vorteilhafterweise ist die Aufnahmeeinrichtung lösbar mit der Verbindungseinheit und/oder dem Kopplungselement verbunden. Die Verbindung kann beispielsweise durch Klemmung, mittels einer Nut oder mittels eines Lochrasters erfolgen, aber auch eine Schraubverbindung oder andere Verbindungsarten sind möglich. Dadurch kann abhängig von der zu transportierenden Lebensmittelportion eine geeignete Aufnahmeeinrichtung eingesetzt werden, sodass die Transportvorrichtung flexibel und insbesondere für verschiedene Lebensmittelprodukte verwendbar ist.

Die Position der Aufnahmeeinrichtung an der Verbindungseinheit und/oder dem Kopplungselement kann variierbar sein. Die Aufnahmeeinrichtung kann beispielsweise mittig an der Verbindungseinheit bzw. dem Kopplungselement positioniert sein, um eine größtmögliche Verringerung der auf ein Transportgut wirkenden Fliehkräfte zu erzielen. Andere Positionierungen sind jederzeit möglich, um beispielsweise den Bahnverlauf der Aufnahmeeinrichtung bedarfsgemäß zu justieren. Zudem wird der flexible Einsatz verschiedener Aufnahmeeinrichtungen ermöglicht. Werden lediglich kleine Auflageflächen zum Transport einer bestimmten Lebensmittelportion benötigt, können beispielsweise mehrere kleine Aufnahmeeinrichtungen an einem Verbindungselement und/oder Kopplungselement befestigt werden, während für andere Lebensmittelportionen bedarfsgerecht eine größere Aufnahmeeinrichtung eingesetzt werden kann.

Die Vorrichtung kann einen Linearmotor umfassen, wobei zumindest eine der Gleiteinheiten als ein Läufer des Linearmotors ausgebildet ist und wobei das Bahnsystem als Stator des Linearmotors ausgebildet ist. Es können also eine, mehrere oder alle Gleiteinheiten des Transportmovers als Läufer des Linearmotors ausgebildet sein. Weist ein Transportmover mit zwei Gleiteinheiten beispielsweise eine angetriebene Gleiteinheit auf, so kann die andere Gleiteinheit nach Art eines Anhängers von der angetriebenen Gleiteinheit mitgeführt werden. Dabei kann die angetriebene Gleiteinheit in Transportrichtung vorne oder hinten angeordnet sein, sodass sie die nicht angetriebene Gleiteinheit zieht oder schiebt. Weist ein Transportmover mehr als zwei Gleiteinheiten auf, so können angetriebene Gleiteinheiten an beliebiger Position angeordnet sein. Weist eine angetriebene Gleiteinheit mehrere Gleitelemente auf, so können ein, mehrere oder alle Gleitelemente angetrieben sein.

Gemäß einer Ausführungsform weist zumindest eine der Gleiteinheiten zumindest einen Permanentmagneten auf, der bei Betrieb der Vorrichtung mit dem Stator des Bahnsystems zusammenwirkt. Ein Permanentmagnet kann somit eine angetriebene Gleiteinheit des Transportmovers definieren.

Vorteilhafterweise ist zumindest ein mit dem Bahnsystem gleitend zusammenwirkender Funktionsabschnitt zumindest einer der Gleiteinheiten aus einem Kunststoff gefertigt. Dieser Funktionsabschnitt ist derart ausgestaltet, dass eine möglichst geringe Gleitreibung zwischen dem Bahnsystem und der Gleiteinheit auftritt. Ist eine Gleiteinheit angetrieben und weist sie insbesondere einen Permanentmagneten auf, so kann dieser mit einem Kunststoff ummantelt sein, der in Zusammenwirkung mit dem Bahnsystem einen niedrigen Reibungskoeffizienten aufweist.

Nachfolgend wird die Erfindung rein beispielhaft anhand möglicher Ausführungsformen unter Bezugnahme auf die beigefügte Zeichnung beschrieben. Es zeigen:
- Fig. 1: einen Transportmover gemäß einer ersten Ausführungsform;
- Fig. 2: eine Vorrichtung zum Bewegen von Portionen eines Lebensmittelprodukts mit einem Transportmover gemäß der ersten Ausführungsform;
- Fig. 3: eine Vorrichtung zum Bewegen von Portionen eines Lebensmittelprodukts gemäß einer zweiten Ausführungsform;
- Fig. 4A: einen Transportmover mit zwei Gleiteinheiten gemäß einer weiteren Ausführungsform;
- Fig. 4B: einen Transportmover mit zwei Gleiteinheiten gemäß noch einer weiteren Ausführungsform;
- Fig. 4C: einen Transportmover mit zwei Gleiteinheiten gemäß noch einer weiteren Ausführungsform;
- Fig. 5A: einen Transportmover mit drei Gleiteinheiten gemäß einer weiteren Ausführungsform;
- Fig. 5B: einen Transportmover mit drei Gleiteinheiten gemäß der Ausführungsform aus Fig. 3.

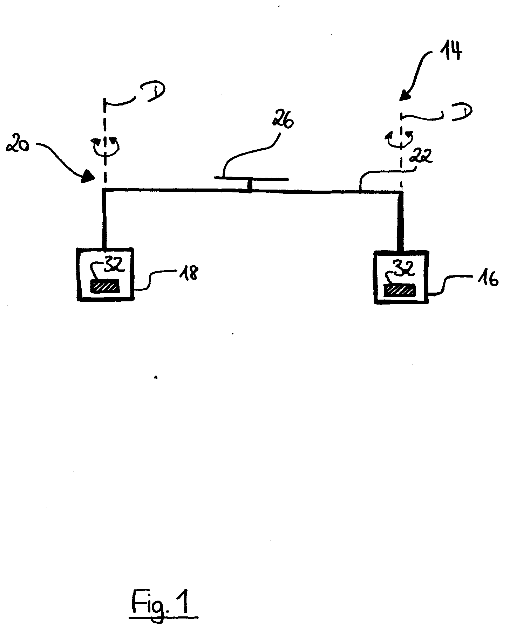

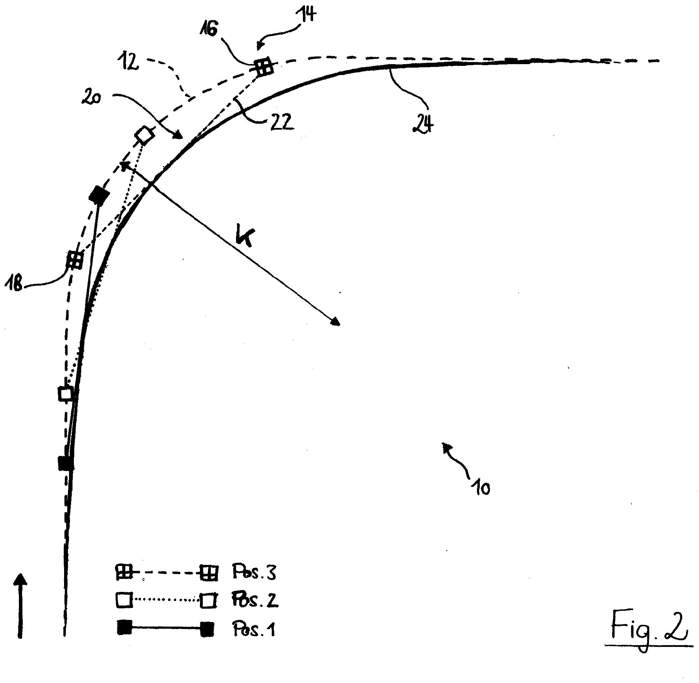

Fig. 1 zeigt eine erste Ausführungsform eines Transportmovers 14 zur Verwendung in einer Vorrichtung 10 (siehe Fig. 2) zum Bewegen von Portionen eines Lebensmittelprodukts. Der Transportmover 14 weist eine erste Gleiteinheit 16 und eine zweite Gleiteinheit 18 auf, die dazu vorgesehen sind, in einem zugehörigen Bahnsystem 12 gleitend geführt zu werden. Die Vorrichtung 10 umfasst einen Linearmotor (nicht gezeigt) zur gerichteten Fortbewegung von Transportmovern 14. Das Bahnsystem 12 ist als Stator des Linearmotors ausgebildet, während der Transportmover 14 und insbesondere einzelne Gleiteinheiten 16, 18 des Transportmovers 14 als Läufer des Linearmotors ausgebildet sind. Zu diesem Zweck weisen die Gleiteinheiten 16 und 18 Permanentmagneten 32 auf, die mit dem Stator des Bahnsystems 12 zusammenwirken.

Die Bewegung der Transportmover 14 wird durch eine nicht gezeigte Steuereinrichtung gesteuert, indem Spulen des Stators bedarfsgerecht bestromt werden. Grundsätzlich ist anstelle des Linearmotors auch eine andere Art einer Antriebsvorrichtung verwendbar.

Die erste und die zweite Gleiteinheit 16 und 18 sind durch eine Verbindungseinheit 20 gekoppelt, welche hier beispielhaft ein stegartiges Verbindungselement 22 umfasst, das eine Länge K aufweist, die dem Kurvenradius K einer Kurve des zugehörigen Bahnsystems 12 entspricht oder größer ist. Die Verbindungseinheit 20 ist mit der ersten Gleiteinheit 16 und der zweiten Gleiteinheit 18 jeweils drehbar um eine Drehachse D, die sich senkrecht zum Bahnverlauf erstreckt, gekoppelt.

An dem Verbindungssteg 22 ist eine Aufnahmeeinrichtung 26 zur Aufnahme zumindest einer Lebensmittelportion angebracht. Die Aufnahmeeinrichtung 26 kann bedarfsgemäß durch verschiedene Träger- und/oder Halterelemente ausgebildet sein. Sie kann drehbar oder schwenkbar mit der Verbindungseinheit 20 gekoppelt sein.

Fig. 2 zeigt skizzenhaft eine Vorrichtung 10 zum Bewegen von Portionen eines Lebensmittelprodukts mit einem Bahnsystem 12 (gestrichelte Linie). Das Bahnsystem 12 umfasst im gezeigten Bereich eine 90°-Kurve, wobei der Kurvenverlauf des Bahnsystems 12 einem Viertelkreis mit einem Kurvenradius K entspricht.

Zudem umfasst die Vorrichtung 10 einen Transportmover 14, der mittels einer ersten Gleiteinheit 16 und einer zweiten Gleiteinheit 18 in dem Bahnsystem 12 gleitend geführt ist. Wie bereits erwähnt, ist die nicht gezeigte Steuereinrichtung dazu eingerichtet, die Bewegungen einzelner Transportmover 14 bzw. einzelner Gleiteinheiten 16, 18 in dem Bahnsystem 12 individuell zu steuern.

Der Transportmover 14 ist an drei verschiedenen Positionen im Bahnsystem 12 abgebildet. Eine generelle Bewegungsrichtung des Transportmovers 14 in dem Bahnsystem 12 ist mit einem Pfeil angezeigt. Beim Durchfahren der Kurve folgen die erste und die zweite Gleiteinheit 16 und 18 jeweils genau dem Verlauf des Bahnsystems 12. Solange beide Gleiteinheiten 16 und 18 sich in einem geraden Streckenabschnitt befinden, ist der Verbindungssteg 22 parallel entlang des Bahnsystems 12 angeordnet (nicht gezeigt). Fährt die erste Gleiteinheit 16 in die Kurve hinein (Position 1), so wird der Verbindungssteg 22 zunächst sanft zur Kurveninnenseite hin von dem Verlauf des Bahnsystems 12 abgelenkt. Er schneidet die Kurve, sodass das Verbindungselement 22 eine Sehne der Länge K der Kurve bildet.

Im weiteren Verlauf der Kurve durchläuft der Transportmover 14 die Positionen 2 und 3 im Bahnsystem 12, wobei der Verbindungssteg 22 bis zum Erreichen der Position 3 immer weiter von dem Verlauf des Bahnsystems 12 abweicht. Hat die erste Gleiteinheit 16 den Scheitelpunkt der Kurve passiert, nähert sich das Verbindungselement 22 langsam wieder dem Verlauf des Bahnsystems 12 an. Die bei vollständigem Durchfahren der Kurve von dem Mittelpunkt des Verbindungsstegs 22 beschriebene Bahnkurve 24 entspricht einer Parabelbahn 24 (durchgezogene Linie).

Im Vergleich zu dem gestrichelt dargestellten Verlauf des Bahnsystems 12 zeichnet sich die Parabelbahn 24 zum einen durch eine sanftere Einleitung der Kurve sowie einen entsprechend sanfteren Auslauf aus der Kurve aus. Zudem ist der maximale Kurvenradius der Parabelbahn 24 im Vergleich zur Viertelkreiskurve des Bahnsystems 12 vergrößert, was die maximalen auf ein Transportgut wirkenden Fliehkräfte beim Durchfahren der Kurve vorteilhaft verringert.

Eine Lebensmittelportion, die auf einer an dem Verbindungssteg 22 befestigten Aufnahmeeinrichtung 26 positioniert ist, ist somit bei Kurvenfahrt weniger negativen Auswirkungen ausgesetzt, wie z.B. einem Verrutschen oder Abrutschen von der Aufnahmeeinrichtung 26 bzw. einem Verschütten von dort angeordneten Flüssigkeiten.

Insgesamt ermöglicht der parabelförmige Bahnverlauf 24 aufgrund der reduzierten Fliehkräfte und der sanfteren Kurveneinleitung ein Durchfahren der Kurve mit höherer Geschwindigkeit. Dies wirkt sich entlang des gesamten Transportweges positiv aus, da eine insgesamt höhere Transportgeschwindigkeit mit weniger Brems- und Beschleunigungsvorgängen möglich wird.

Je größer der Abstand zwischen der ersten Gleiteinheit 16 und der zweiten Gleiteinheit 18 ist, desto wirksamer wird die Fliehkraft in Kurven reduziert. Es ist möglich, die Länge des Verbindungselements 22 aktiv oder passiv zu ändern und somit eine bedarfsgerechte Anpassung der Transportmover 14 an den Verlauf des Bahnsystems 12 und an die Eigenschaften des Transportguts zu erzielen. Eine derartige Längenverstellung kann beispielsweise pneumatisch gesteuert sein oder gegen eine Vorspannung einer Feder oder eine Magnetkraft erfolgen. Insbesondere kann die Anpassung kontinuierlich, beispielsweise mit zunehmender (Quer-)Beschleunigung auf das Transportgut, erfolgen oder auch ab einem bestimmten Schwellenwert.

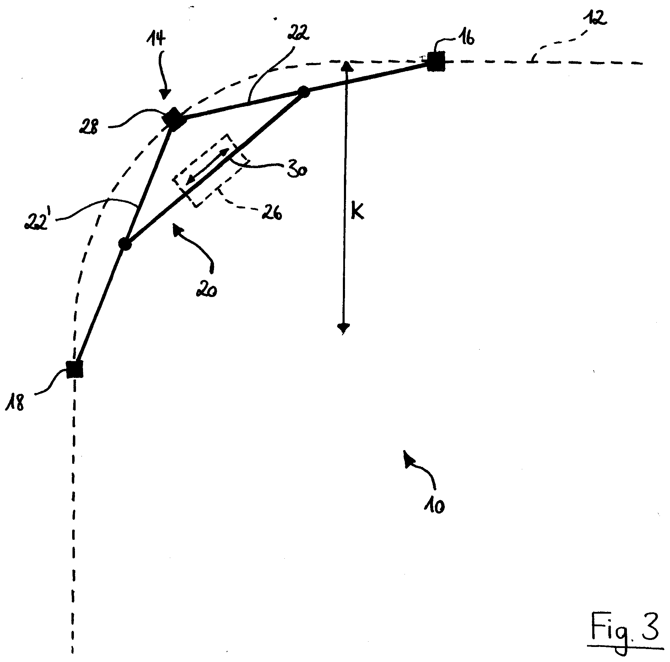

Fig. 3 zeigt eine Vorrichtung 10 zum Bewegen von Portionen eines Lebensmittelprodukts mit einem Transportmover 14 gemäß einer zweiten Ausführungsform. Der gezeigte Transportmover 14 umfasst neben einer ersten Gleiteinheit 16 und einer zweiten Gleiteinheit 18 eine dritte Gleiteinheit 28, die zwischen der ersten und der zweiten Gleiteinheit 16 und 18 angeordnet ist. Die Verbindungseinheit 20 umfasst hier zwei stegartige Verbindungselemente 22 und 22' zur Kopplung der dritten Gleiteinheit 28 mit der ersten Gleiteinheit 16 und der zweiten Gleiteinheit 18. Gemäß der gezeigten Ausführungsform weisen die Verbindungselemente 22 und 22' jeweils die Länge eines Kurvenradius K auf. Grundsätzlich können aber die Verbindungselemente 22 und 22' gleich lang wie, kürzer oder länger als der Kurvenradius K sein und sich in ihrer Länge voneinander unterscheiden.

Die Verbindungselemente 22 und 22' sind durch ein Kopplungselement 30 miteinander gekoppelt, das drehbar in Bezug auf die Verbindungselemente 22 und 22' gelagert ist und teleskopartig in seiner Länge variierbar ist, wie mit einem Doppelpfeil angedeutet ist. In der gezeigten Ausführungsform ist das Kopplungselement 30 mittig an beiden Verbindungselementen 22 und 22' angebracht. Grundsätzlich ist die Positionierung des Kopplungselements 30 jedoch bedarfsgerecht variierbar. Eine Aufnahmeeinrichtung 26 für eine Lebensmittelportion ist in der gezeigten Ausführungsform an dem Kopplungselement 30 befestigt.

Beim Durchfahren der gezeigten Bahnkurve weicht das Kopplungselement 30 noch weiter zur Kurveninnenseite hin von dem durch das Bahnsystem 12 vorgezeichneten Bahnverlauf ab, als der Verbindungssteg 22 des Transportmovers 14 aus Fig. 2. Dadurch ergeben sich für die zweite Ausführungsform des Transportmovers 14 in noch größerem Maße die Vorteile einer sanften Kurveneinleitung, verringerter Fliehkräfte beim Durchfahren der Kurve und eines sanften Kurvenauslaufs. Vorteilhafterweise kann durch den Einsatz einer dritten Gleiteinheit 28 eine besonders hohe Fahrstabilität des Transportmovers 14 in dem Bahnsystem 12 erzielt werden.

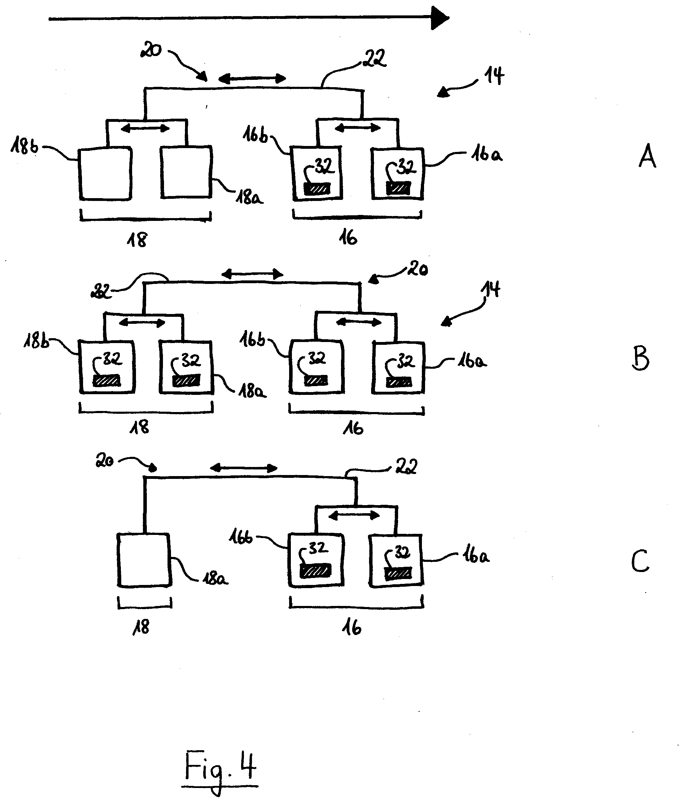

Fig. 4 zeigt verschiedene weitere Ausführungsformen eines Transportmovers 14. Die Fortbewegungsrichtung der Transportmover 14 in einem zugehörigen Bahnsystem 12 (nicht gezeigt) ist mit einem Pfeil angedeutet.

Fig. 4A zeigt einen Transportmover 14 mit einer ersten Gleiteinheit 16 und einer zweiten Gleiteinheit 18, die durch eine Verbindungseinheit 20 miteinander gekoppelt sind und die jeweils ein erstes Gleitelement 16a bzw. 18a und ein zweites Gleitelement 16b bzw. 18b umfassen. Die Kopplung zwischen den Gleiteinheiten 16, 18 und der Verbindungseinheit 20 ist - wie in Fig. 1 gezeigt - bevorzugt drehbar. Die Gleitelemente 16a und 16b bzw. 18a und 18b sind jeweils miteinander verbunden, wobei der Abstand zwischen den Gleitelementen 16a und 16b bzw. 18a und 18b variabel sein kann. In der Regel ist er jedoch fix.

Die Gleitelemente 16a und 16b weisen jeweils einen Permanentmagneten 32 auf. Somit stellt die Gleiteinheit 16 einen Läufer des Linearmotors der Vorrichtung 10 dar und ist zugleich die angetriebene (aktive) Gleiteinheit 16 des Transportmovers 14. Die zweite Gleiteinheit 18 weist keine Permanentmagneten 32 auf und ist daher nicht angetrieben. Da die erste Gleiteinheit 16 in Bewegungsrichtung des Transportmovers 14 vorne angeordnet ist, zieht sie die zweite Gleiteinheit 18 nach Art eines Anhängers hinter sich her durch das Bahnsystem 12.

Grundsätzlich kann jedoch auch die in Bewegungsrichtung hinten angeordnete Gleiteinheit 18 angetrieben sein, sodass sie eine nicht angetriebene (passive) Gleiteinheit 16 vor sich her schiebt (nicht gezeigt). Ebenso kann ein Transportmover 14 in dem Bahnsystem 12 in beide Richtungen bewegt werden, gewissermaßen also in "Vorwärts-" und in "Rückwärtsrichtung". Grundsätzlich ist es in vielen Fällen unerheblich, welche der Gleiteinheiten 16, 18, 28 eines Transportmovers 14 angetrieben/aktiv sind.

Das stegartige Verbindungselement 22 der Verbindungseinheit 20 ist in den gezeigten Beispielen in seiner Länge variierbar, wie mittels eines Doppelpfeils angedeutet ist. Ein Einstellen der Länge des Verbindungsstegs 22 kann beispielsweise manuell erfolgen, z.B. indem mittels eines Lochrasters eine gewünschte Steglänge fixiert wird.

Fig. 4B zeigt einen Transportmover 14, welcher in vielen Punkten mit der Ausführungsform aus Fig. 4A übereinstimmt. Im Vergleich zu Fig. 4A weisen in Fig. 4B jedoch die erste Gleiteinheit 16 und die zweite Gleiteinheit 18 Permanentmagneten 32 auf, die in den Gleitelemente 16a, 16b, 18a, 18b angeordnet sind. In anderen Worten sind die erste Gleiteinheit 16 und die zweite Gleiteinheit 18 angetrieben.

Als Verbindungselement 22 kommt in dieser Ausführungsform ein teleskopartig verlängerbarer Steg 22 zum Einsatz. Eine Längenanpassung des Verbindungsstegs 22 ist somit auch im laufenden Betrieb der Vorrichtung 10 möglich. Werden durch die Bahnsteuerung unterschiedliche Fortbewegungsgeschwindigkeiten für die erste Gleiteinheit 16 und die zweite Gleiteinheit 18 eingestellt, so zieht sich der Verbindungssteg 22 dann auseinander, wenn die erste Gleiteinheit 16 sich schneller fortbewegt als die zweite Gleiteinheit 18. Umgekehrt schiebt sich der Verbindungssteg 22 zusammen und verkürzt sich, wenn die zweite Gleiteinheit 18 sich schneller fortbewegt als die erste Gleiteinheit 16.

Mit einem derartig steuerbaren Transportmover 14 ist die Länge der Verbindungseinheit 20 entlang eines durch das Bahnsystem 12 vorgegebenen Transportwegs flexibel einstellbar. Insbesondere kann die Länge des Transportmovers 14 beispielsweise für das Durchfahren von Bahnkurven verlängert werden, um Fliehkräfte und damit einhergehende negative Auswirkungen auf das Transportgut zu reduzieren. In Bereichen des Bahnverlaufs, in denen kompaktere Abmessungen des Transportmovers 14 von Vorteil sind, beispielsweise in engen Abfüll- oder Produktionsbereichen, kann die Steglänge des Verbindungselements 22 vorteilhaft verkürzt werden.

Fig. 4C zeigt eine weitere Ausführungsform eines Transportmovers 14. Eine erste Gleiteinheit 16, welche zwei jeweils mit Permanentmagneten 32 versehene Gleitelemente 16a und 16b aufweist, wirkt als Antrieb und zieht eine zweite Gleiteinheit 18 hinter sich in dem Bahnsystem 12. Die Gleiteinheit 18 weist lediglich ein Gleitelement 18a auf. Durch Verzicht auf ein zweites Gleitelement 18b kann die zwischen Bahnsystem 12 und Transportmover 14 wirkende Gleitreibung wirksam verringert werden, wobei für zahlreiche Anwendungen dennoch eine ausreichende Stabilität des Transportmovers 14 gegeben ist.

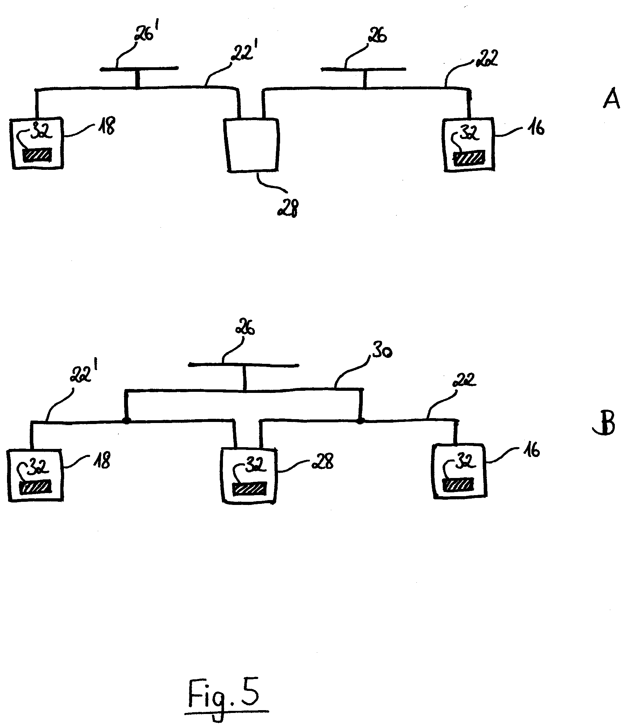

Fig. 5 zeigt zwei Ausführungsformen eines Transportmovers 14 mit jeweils drei Gleiteinheiten 16,18, 28. Die Gleiteinheiten 16 und 28 sind jeweils mittels eines ersten Verbindungselements 22 und die Gleiteinheiten 18 und 28 mittels eines zweiten Verbindungselements 22' gekoppelt. Die Verbindungselemente 22, 22' können längenvariabel sein.

In Fig. 5A sind die erste und die zweite Gleiteinheit 16 und 18 mittels eines Permanentmagneten 32 angetrieben. Jede der Verbindungseinheiten 22 und 22' trägt eine Aufnahmeeinrichtung 26 bzw. 26'. Ein solcher Transportmover 14 kann durch Anhängen mit weiteren angetriebenen und/oder unangetriebenen Gleiteinheiten 16, 18, 28 und Verbindungselementen 22, 22' sowie Aufnahmeeinrichtungen 26, 26' ergänzt werden.

Fig. 5B zeigt einen Transportmover 14, wie er in Fig. 3 zusammen mit dem Bahnsystem 12 dargestellt ist. Die drei Gleiteinheiten 16, 18 und 28 sind alle durch Permanentmagneten 32 angetrieben und somit durch die Steuereinrichtung individuell ansteuerbar. Die Verbindungselemente 22 und 22' werden hier von einem Kopplungselement 30 überbrückt, das eine Aufnahmeeinrichtung 26 zur Aufnahme einer Lebensmittelportion trägt.

Grundsätzlich kann die Anzahl der Gleitelemente 16a, 16b, 18a, 18b je Gleiteinheit 16, 18, 28 variieren und ist nicht auf ein oder zwei Gleitelemente 16a, 16b, 18a, 18b pro Gleiteinheit 16, 18, 28 limitiert. Es können zudem auch weitere Gleiteinheiten 16, 18, 28 und gegebenenfalls Kopplungselemente 30 in einem Transportmover 14 umfasst sein. Es versteht sich, dass die beispielhaft in Kombination miteinander aufgeführten Merkmale im Rahmen der Ansprüche von einem Fachmann beliebig miteinander kombiniert werden können.

### Bezugszeichenliste

- 10: Vorrichtung zum Bewegen von Portionen eines Lebensmittelprodukts
- 12: Bahnsystem
- 14: Transportmover
- 16: erste Gleiteinheit
- 16a: erstes Gleitelement der ersten Gleiteinheit
- 16b: zweites Gleitelement der ersten Gleiteinheit
- 18: zweite Gleiteinheit
- 18a: erstes Gleitelement der zweiten Gleiteinheit
- 18b: zweites Gleitelement der zweiten Gleiteinheit
- 20: Verbindungseinheit
- 22: Verbindungselement
- 22': zweites Verbindungselement
- 24: Parabelbahn / Bahnkurve
- 26: Aufnahmeeinrichtung
- 28: dritte Gleiteinheit
- 30: Kopplungselement
- 32: Permanentmagnet
- K: Kurvenradius
- D: Drehachse

## Patentansprüche

1. Vorrichtung (10) zum Bewegen von Portionen eines Lebensmittelprodukts, umfassend:
ein Bahnsystem (12), das einen Transportweg mit zumindest einer Kurve definiert,
zumindest einen Transportmover (14), wobei der Transportmover (14) zumindest eine erste Gleiteinheit (16) und eine zweite Gleiteinheit (18) aufweist, die von dem Bahnsystem (12) gleitend geführt sind und die mittels wenigstens einer Verbindungseinheit (20), die zumindest ein Verbindungselement (22) umfasst, miteinander gekoppelt sind, wobei die Verbindungseinheit (20) mit wenigstens einer Aufnahmeeinrichtung (26) zur Aufnahme zumindest einer Portion gekoppelt ist und einen Abstand zwischen der ersten Gleiteinheit (16) und der zweiten Gleiteinheit (18) definiert, der zumindest einem Krümmungsradius (K) der Kurve entspricht oder größer ist, und
eine Steuereinrichtung zur individuellen Steuerung der Bewegung des Transportmovers (14) in dem Bahnsystem (12).

2. Vorrichtung (10) nach Anspruch 1 oder 2,
**dadurch gekennzeichnet,**
**dass** eine dritte Gleiteinheit (28) vorgesehen ist, die zwischen der ersten (16) und der zweiten Gleiteinheit (18) angeordnet ist, wobei die Verbindungseinheit (20) ein erstes Verbindungselement (22) und ein zweites Verbindungselement (22') umfasst, wobei die dritte Gleiteinheit (28) mittels des ersten Verbindungselements (22) mit der ersten Gleiteinheit (16) und mittels des zweiten Verbindungselements (22') mit der zweiten Gleiteinheit (18) gekoppelt ist.

3. Vorrichtung (10) nach Anspruch 2,
**dadurch gekennzeichnet,**
**dass** das erste Verbindungselement (22) mit einer ersten Aufnahmeeinrichtung (26) und das zweite Verbindungselement (22') mit einer zweiten Aufnahmeeinrichtung (26') gekoppelt sind, die jeweils zur Aufnahme zumindest einer Portion vorgesehen sind.

4. Vorrichtung (10) nach Anspruch 2,
**dadurch gekennzeichnet,**
**dass** eine Aufnahmeeinrichtung (26) an wenigstens einem Kopplungselement (30) angeordnet ist, das das erste Verbindungselement (22) und das zweite Verbindungselement (22') miteinander verbindet.

5. Vorrichtung (10) nach zumindest einem der vorstehenden Ansprüche, **dadurch gekennzeichnet,**
**dass** die Gleiteinheiten (16, 18, 28) und die ihnen jeweils zugeordneten Verbindungselemente (22, 22') gelenkig oder drehbar um eine Drehachse (D), die senkrecht zu einer Transportrichtung angeordnet ist, miteinander gekoppelt sind, und/oder dass die Verbindungselemente (22, 22') und das ihnen jeweils zugeordneten Kopplungselement (30) gelenkig oder drehbar um eine Drehachse (D), die senkrecht zu einer Transportrichtung angeordnet ist, miteinander gekoppelt sind.

6. Vorrichtung (10) nach zumindest einem der vorstehenden Ansprüche, **dadurch gekennzeichnet,**
**dass** eine Längserstreckung des Verbindungselements (22, 22') oder - falls mehr als ein Verbindungselement (22, 22') vorgesehen ist - zumindest eines der Verbindungselemente (22, 22') und/oder des Kopplungselements (30) variierbar ist, insbesondere im laufenden Betrieb.

7. Vorrichtung (10) nach zumindest einem der vorstehenden Ansprüche, **dadurch gekennzeichnet,**
**dass** die Höhe und/oder Neigung der Verbindungseinheit (20) und/oder des Kopplungselements (30) und/oder der Aufnahmeeinrichtung (26) bezüglich des Bahnsystems (12) einstellbar sind, insbesondere im laufenden Betrieb.

8. Vorrichtung (10) nach zumindest einem der vorstehenden Ansprüche, **dadurch gekennzeichnet,**
**dass** die Aufnahmeeinrichtung (26) lösbar mit der Verbindungseinheit (20) und/oder dem Kopplungselement (30) verbunden ist.

9. Vorrichtung (10) nach zumindest einem der vorstehenden Ansprüche, **dadurch gekennzeichnet,**
**dass** die Position der Aufnahmeeinrichtung (26) an der Verbindungseinheit (20) und/oder dem Kopplungselement (30) variierbar ist.

10. Vorrichtung (10) nach zumindest einem der vorstehenden Ansprüche, **dadurch gekennzeichnet,**
**dass** die Vorrichtung (10) einen Linearmotor umfasst, wobei zumindest eine der Gleiteinheiten (16, 18, 28) als ein Läufer des Linearmotors ausgebildet ist und wobei das Bahnsystem (12) als Stator des Linearmotors ausgebildet ist.

11. Vorrichtung (10) nach Anspruch 10,
**dadurch gekennzeichnet,**
**dass** zumindest eine der Gleiteinheiten (16, 18, 28) zumindest einen Permanentmagneten (32) aufweist, der bei Betrieb der Vorrichtung (10) mit dem Stator des Bahnsystems (12) zusammenwirkt.

12. Vorrichtung (10) nach zumindest einem der vorstehenden Ansprüche, **dadurch gekennzeichnet,**
**dass** zumindest ein mit dem Bahnsystem (12) gleitend zusammenwirkender Funktionsabschnitt zumindest einer der Gleiteinheiten (16, 18, 28) aus einem Kunststoff gefertigt ist.
